# EUROPEAN PATENT APPLICATION

(11) **EP 2 608 031 A1**
(43) Date of publication of application: **26.06.2013**
(21) Application number: 12196013.2
(22) Date of filing: 07.12.2012
(51) Int. Cl.: G06F 9/50, G06Q 10/06, G06Q 10/10

(54) **Project management charting**

(30) Priority: 19.12.2011 US 201113329506
(71) Applicant: General Electric Company, Schenectady, New York 12345 (US)
(72) Inventor: Singh, Anurag, Schenectady, NY 12345 (US); Hannula, Scott Victor, Schenectady, NY 12345 (US)
(74) Representative: Cleary, Fidelma

(57) **Abstract**

A project management charting method 200 includes defining, in a computing system 500, a breakdown of work for a project, defining, in the computing system 500, tasks for the breakdown of work, defining, in the computing system 500, levels into which the tasks are defined and defining, in the computing system 500, relative influence among the tasks.

## Description

The subject matter disclosed herein relates generally to project management, and more particularly to a project management charting method for organization, planning analysis and tracking of projects and goals.

Typical project management tools are typically linear in time, compiling categorizing, coordinating and prioritizing tasks until the scheduled project is complete or moves onto the next phase. Conventional project management tools focus on time and do not provide visualization on resource allocation, relative size of tasks, and contingent strategies for changed resources and resource allocation. Without resource allocation tools and relative size of tasks, for example, it can be difficult to determine where the project is lagging, for example. Additionally if there is any change in the plan there is no easy way to readily recognize this by looking at a project plan and how or when it changed.

According to one aspect of the invention, a project management charting method is described. The method includes defining, in a computing system, a breakdown of work for a project, defining, in the computing system, tasks for the breakdown of work, defining, in the computing system, levels into which the tasks are defined and defining, in the computing system, relative influence among the tasks.

According to another aspect of the invention, a computer program product is described. The computer program product includes a non-transitory computer readable medium storing instructions for causing a computer to implement a project management charting method. The method includes defining, in a computing system, a breakdown of work for a project, defining, in the computing system, tasks for the breakdown of work, defining, in the computing system, levels into which the tasks are defined and defining, in the computing system, relative influence among the tasks.

According to yet another aspect of the invention, a project management charting system is described. The system includes a processor configured to define a breakdown of work for a project, define tasks for the breakdown of work, define levels into which the tasks are defined and define relative influence among the tasks.

Various advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a project management charting method in accordance with exemplary embodiments;
FIGS. 2-4 illustrate examples of a project management chart over time in accordance with exemplary embodiments; and
FIG. 5 illustrates an exemplary embodiment of a system for organizing, planning analysis and tracking of projects and goals.

The detailed description explains embodiments of the invention, together with advantages and features, by way of example with reference to the drawings.

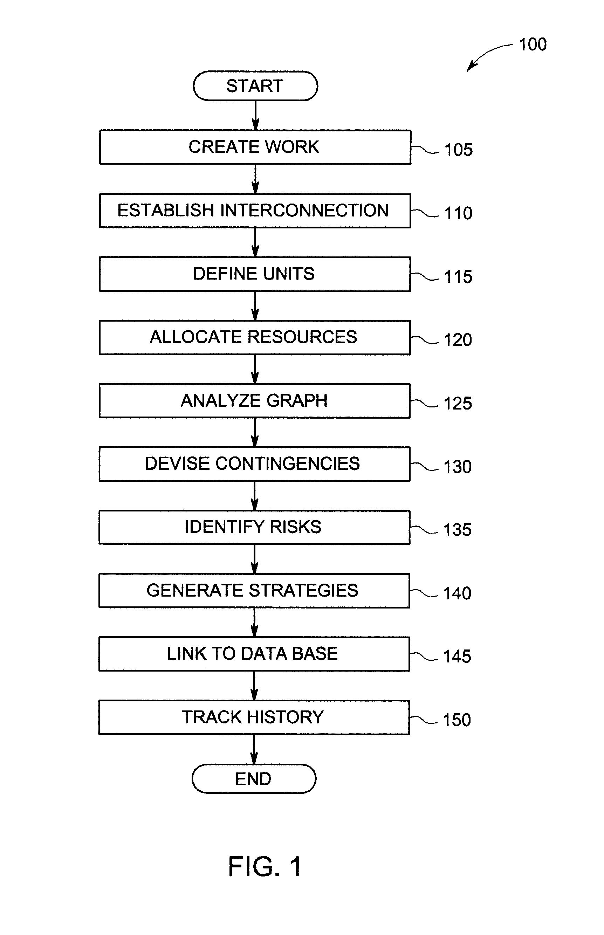

FIG. 1 illustrates a project management charting method 100 in accordance with exemplary embodiments. The method 100 can be implemented in any suitable computing system that includes a display as further described herein. The method 100 describes the generation of a chart/graph as described further herein. For example, the generated chart/graph can be in a bottoms up and top down goals/objective decision format.

At block 105, the user defines and creates the workload for the particular project, identifying the various tasks associated with the project. High level business goals can be stated, which can be broken down to the lower levels of goals, each of which contribute in a specific way to one or more goals above themselves. In exemplary embodiments, the user can develop of chart/graph or tree on the display, starting with the ultimate objective of the project at the top and keep breaking the project down into sub-pieces, tasks and sub tasks. At block 110, the user establishes the interconnection of the tasks and sub-tasks. In exemplary embodiments, the interconnection is more than just direct parent-child relations. The interconnection also includes any tasks that are directly impacted by other tasks. As such, tasks that directly impact one another are interconnected. At block 115, the user defines units for various parameters, such as, but not limited to currency, time, resources and associated expertise. At block 120, resources are allocated to the tasks. In exemplary embodiments, the user can initially assign resources. In addition, the user can re-allocate resources at later times. Furthermore, the system can automatically re-allocate resources if certain tasks are complete and other tasks are lagging as further described herein. At block, 125 the chart/graph is analyzed for estimated completion dates. The user can analyze the chart/graph and the system can also analyze the charts/graphs automatically. At block 130, the user can identify various contingent scenarios and study the impact of those scenarios. For example, the user can identify if one task is completed earlier, how it affects other tasks. Conversely, the user can identify if the same task lags, how it affects other tasks. At block 135, the user identifies risks. In exemplary embodiments, the system can automatically predict risks for specific strategies. For example, there may be a task marked four hours. The same task may have three other tasks depending on it. As such, the risk is that three tasks would suffer if the task marked four hours lags. At block 140, the system can make predictions and recommend planning strategies. Over time the system can be designed to recognize various project types and be able to predict risk and generate associated planning strategies/recommendations. At block 145, once a chart/graph is established, the chart/graph can be linked to an external database, where resources can update their status automatically, such that most recent information is used. Alternatively, the resources can be automatically updated on a periodic basis, such as weekly. Strategies can then be shifted accordingly. At block, 150, the system can track the history of the project and the various shifts in time and resource allocation that occur. Additionally this history can be represented in an animated form or like a movie where one can visually inspect very easily how the plan changed, execution happened and what changes or transformations happened. This feature also applies for predictive plan given the history of the execution and could give insight as how the future of the project would progress if nothing else changes.

Once the chart/graph is generated (e.g., the top-down process is complete), there would be different layers of goals each leading to a higher layer (or a cluster of them leading to a higher layer). A level of a subject goal is determined by how much it impacts/affects the goal(s) above the subject goal. A certain goal's organizational hierarchy does not necessarily determine its position or size in the generated chart. For example, if a first task does not work at all if a second task has an issue (e.g., the second task is delayed), then the first task ranks higher in the generated chart even though the first task is several layers into the project. To float up or down, a goal or task must be completed and cross a certain weight threshold. As such, the method is dynamic and reflects a snapshot of the entire process/project and how close it is to completion. The generated chart/graph allows business leaders to allocate resources and allow them to make data driven informed business decisions. Although a chart/graph data structure is described herein to represent and implement a project to allow for correct variations and flexibility, other structures are contemplated in other exemplary embodiments.

The method 100 provides a charting scheme that generates a chart/graph that aids the user in organizing information in a hierarchical format. The method 100 further provides analysis and different ways to view project data, including but not limited to identifying objectives, resources, risks, time estimates, studying "what-if' contingent scenarios, tracking of various parameters (not just schedule/task/resources), impact and inter-relationships of various factors (i.e., money, effort, task external factors and the like). For example, layered business goals can be organized and visualized to allow efficient tracking, planning, and identification of higher goals/deliverables. In this way, the system provides instantaneous prediction of when a certain goal/task might be completed.

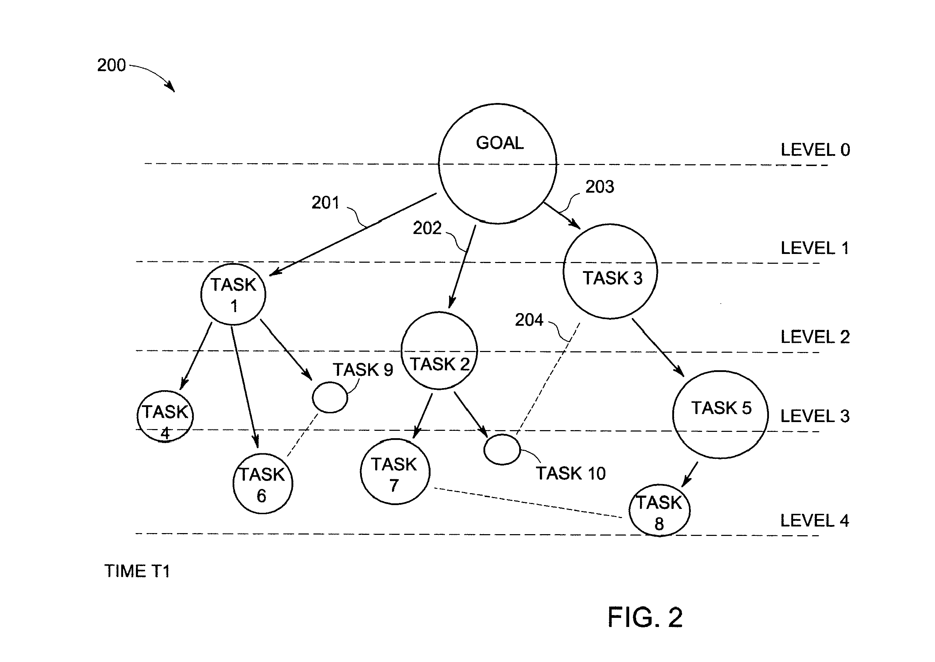

FIGS. 2-4 illustrate examples of a project management chart 200 over time in accordance with exemplary embodiments. It will be appreciated that FIGS. 2-4 are only examples. FIG. 2 illustrates an exemplary project chart 200 at time T1. The chart 200 includes a Goal at level 0, representing the final project for which the chart 200 is generated to aid in achieving. In the example, the chart 200 includes five levels: Level 0, Level 1, Level 2, Level 3 and Level 4. As described, Level 0 represents the goal. Levels 1-4 represent are positioned for relative importance and impact on the Goal and on other tasks distributed among the levels. As illustrated, in addition to the Goal, there are ten tasks: Task 1, Task 2, Task 3, Task 4, Task 5, Task 6, Task 7, Task 8, Task 9, and Task 10. The tasks are positioned among the levels to demonstrate their relative influence with respect to other tasks and the Goal. It can be appreciated that the user or team can initially identify the number of levels and the number of tasks, as well as their relative influence in the chart 200. It will be appreciated that the relative influence can be both subjective and objective. Initial placement of the levels and task can be subjective placement by the user or team. Over time and over projects the method 100 and respective system can learn based on prior and similar projects to set our initial suggestions on not only the number of tasks and levels but also the relative placement of the tasks and levels. As described herein, the relative importance of one task to another and to the goal can result in tasks being place on certain levels. FIG. 2 illustrates that several tasks also reside in between levels. For example, Task 1 resides between Levels 1 and 2, illustrating that Task 1 influences both tasks on Level 1 and Level 2, and also has a relative influence on the Goal higher than other tasks. Task 1 also resides closer to Level 1, which illustrates its relative influence being closer to tasks on Level 1 and the Goal. As such, it will be appreciated that that there is a spectrum of sub-levels between levels. In other exemplary embodiments, sub levels can be represented on the chart 200. It will also be appreciated that a task number does not necessarily refer to a task that is to be completed before another task or has relative influence higher than a higher or lower numbered task. For example, Task 3 resides on Level 1 while Task 2 resides on Level 2. This relative positioning does not mean that Level 1 must complete before Level 2 or that Task 2 must complete before Task 3. The layout represents relative influence and can also represent a chronology. However, it will be appreciated that it is possible for a relatively non-influential task to complete before other tasks. It is also possible for a highly influential task to complete before any other tasks.

In exemplary embodiments, relative influence of tasks and the Goal is represented by connectors among the tasks and the Goal. For example, the Goal is shown with a connector 201 to Task 1, a connector 202 to Task 2 and a connector to Task 3. The connectors 201, 202, 203 are solid indicating that Tasks 1-3 have a direct influence on the goal. As such, as Tasks 1-3 complete, the relative completion of the Goal is directly influenced. It will also be appreciated that not all tasks are directly connected. For example, Task 1 has no connection to Task 2. As such, as Task 2 completes, Task 1 is not directly influenced. It can be appreciated however, that Task 9 is connected to both Task 9. It is possible that as Task 2 completes, Task 1 also is influenced due to the connection via Task 9. However, indirect influence can also be anticipated. For example, Connectors 201, 202, 203 are illustrated as solid lines, representing a direct influence. Other line types such as dashes can be implemented to represent indirect influence. For example, a dashed connector 204 connects Task 3 and Task 10 indicating that each of Task 3 and Task 10 complete, there is a relative indirect influence on the respective task. It will be appreciated that the specifics of how the influence occurs is unique to each project. For example, a direct connection between two tasks may mean that a subroutine in a program must be complete to influence another subroutine in the program. An indirect connection may be that although two subroutines are not related to another, they are both part of a program in which the subroutines are a part. It will be appreciated that various types of connectors, such as but not limited to, number of dashes, thickness, color and the like are contemplated for different types of direct and indirect influence.

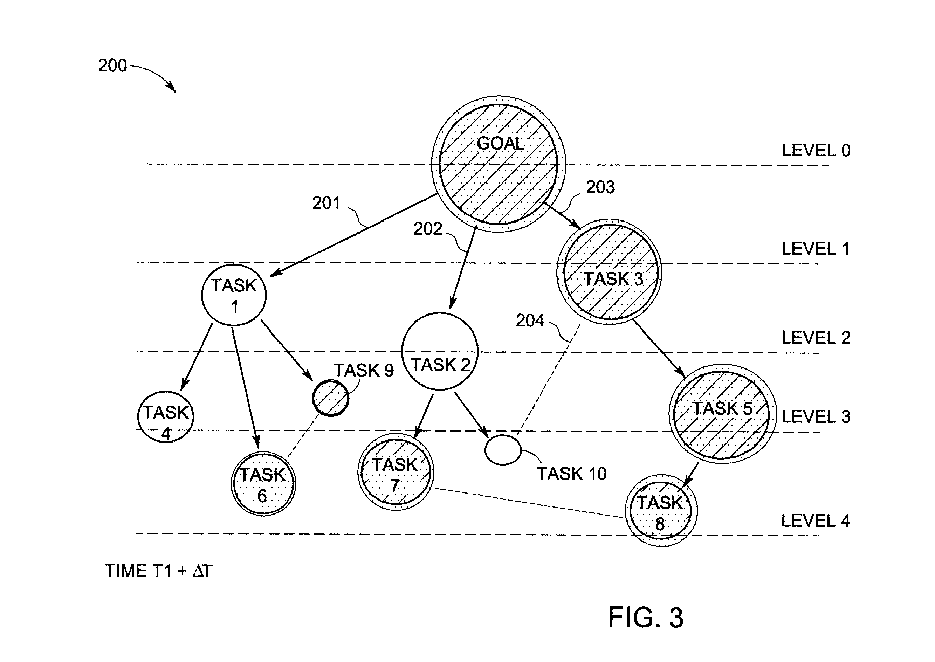

As described herein, the different tasks and the Goal are influenced by one another. This influence can be initially determined by the user or the team. However, one the connections and influences have been established. The method 100 can automatically adjust the appearance of the chart 200. For example, the size of the tasks can represent time to completion of the tasks and the Goal. In the example, circles are shown to represent the tasks. It will be appreciated that any shape, such as but not limited to squares can also be represented on the chart 200. In the example, therefore, the relative diameters of the circular tasks represent time. As such, the Goal has the largest diameter. The diameters of the tasks can be selected by the user or team as estimates of the time it will take to complete the tasks. The diameters can be changed over the life of the projects either manually or automatically. FIG. 3 illustrates the chart 200 at time T1 + AT. At time T1 + ΔT, several aspects of the chart 200 have changed. In exemplary embodiments, when a task has been complete, it can be represented as "grayed out". For example, Task 6 is complete, so it is shown "grayed out", which can be presented by a different color or shade or outline (e.g., dashed). If the tasks are labeled such as "Task 6", the font associated with the label can also change. In exemplary embodiments, tasks that are not yet complete, but are in difference levels of completion can be represented as partially grayed out. For example, the Goal, Task 3, Task 5, Task 7 and Task 8 are all partially complete. As such, an inner diameter can be represented as a different color while the outer diameter becomes more and more grayed out over time. The remaining diameter of the task can become smaller and smaller as the task is complete. It will also be appreciated that tasks that have not yet been completed at all remain an initial color such as Task 1, Task 2, Task 4 and Task 10. FIG. 3 further illustrates the direct influence that Task 8 has on Task 5 and Task 7, the influence that Task 5 has on Task 3 and the influence that Task 3 has on the Goal, for example. A completion or a partial completion of a task, even directly connected does not necessarily have an effect on the diameter of a connected task. For example, although Task 6 is complete and Task 9 is partially complete, none of Task 1 is shown as complete. As such, as the project progresses, the user or team can identify further how the tasks are interrelated. As such, the chart 200 continually provides updated information of the Goal and the interrelation of the various tasks.

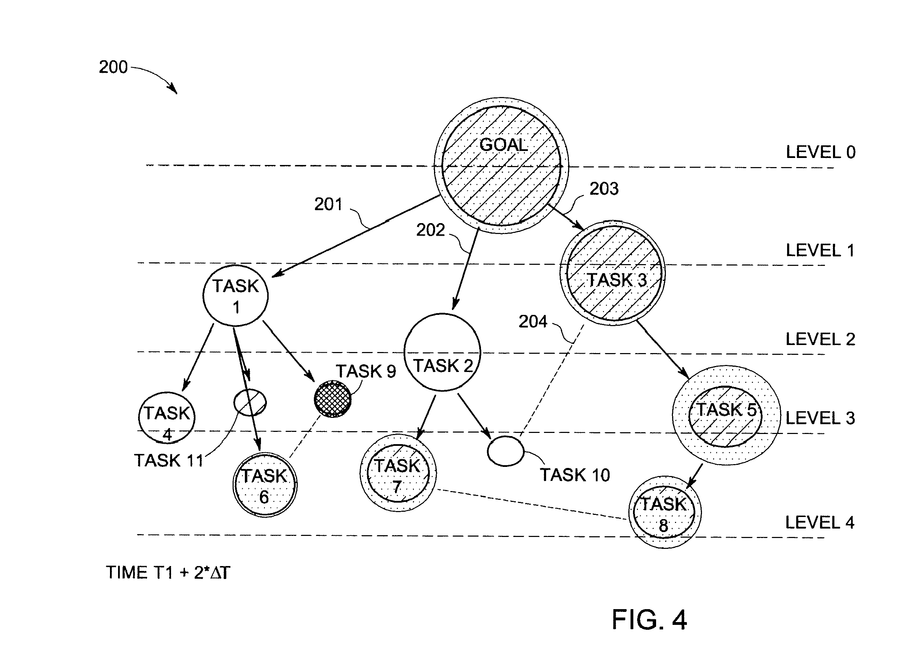

FIG. 4 illustrates the chart 200 at time T1 + 2*ΔT. FIG. 4 illustrates that Task 5, Task 7 and Task 8 have all undergone additional completion as illustrated by the shrinking inner diameters of the respective tasks. In addition, FIG. 4 illustrates that at a later time in the project, different tasks can be identified. For example, Task 11 is added and has a direct connection to Task 1. AS such, it will be appreciated that the chart 200 is a dynamic entity that can be updated during the life of the project. In addition, during the life of a project, resources can be re-allocated based on changing needs of the project. For example, FIG. 4 shows a change in the appearance of Task 9 and the connector 205 to Task 9, indicating that resources have been re-allocated to Task 9. For example, since Task 6 is complete, the resources from Task 6 can be allocated to Task 9. In another example, since Task 8 is close to completion, resources from Task 8 can be allocated to Task 9.

As such, FIGS. 2-4 demonstrate that the exemplary method 100 can establish a chart 200 that not only provides a chronology for a project, but also provides an interconnection among tasks, the relative influence on tasks and an ability to update, modify and add/delete tasks, providing an updated and dynamic indication to a user or team of the status of a project.

In exemplary embodiments, the implementation of the method 100 and other exemplary methods contemplated herein can be subject to rules as now described. In generating the initial graph, several features of the chart 200 are defined. As described above, the work breakdown structure, that is, how the Goal is defined into the tasks is defined. The levels are also defined, along with where each of the tasks is placed in the levels. The relative influences (impacts) and correlations among the tasks are also defined (e.g., by the connections). Other features for the chart 200 can include but are not limited to date to completions and available resources. Once the chart is established, functionality can include a query about a particular time period along the timeline of the project. In this way, an original chart 200, such as in FIG. 2, can be hidden, and a time slice of a later time such as T1+ ΔT of FIG. 3, can be displayed. In exemplary embodiments, the display that includes the chart 200 can be a graphical user interface (GUI) that includes functionality to drag and drop new visual elements, such as a new task, and to edit its size and other characteristics that define the task (e.g., connections).

As described herein, the method 100 can be implemented to plan a project. In other exemplary embodiments, the method 100 can also be implemented to perform an analysis of a past project, thereby generating a chart based on a complete project to see how it can be improved in the future. In a similar manner, the method can be used to make future decisions for a project. Other potential applications and benefits include, risk prediction and management strategies, which can also be linked to a database of similar projects that will enable it to be more intelligent and smart in its predictions and make recommendations for planning strategies.

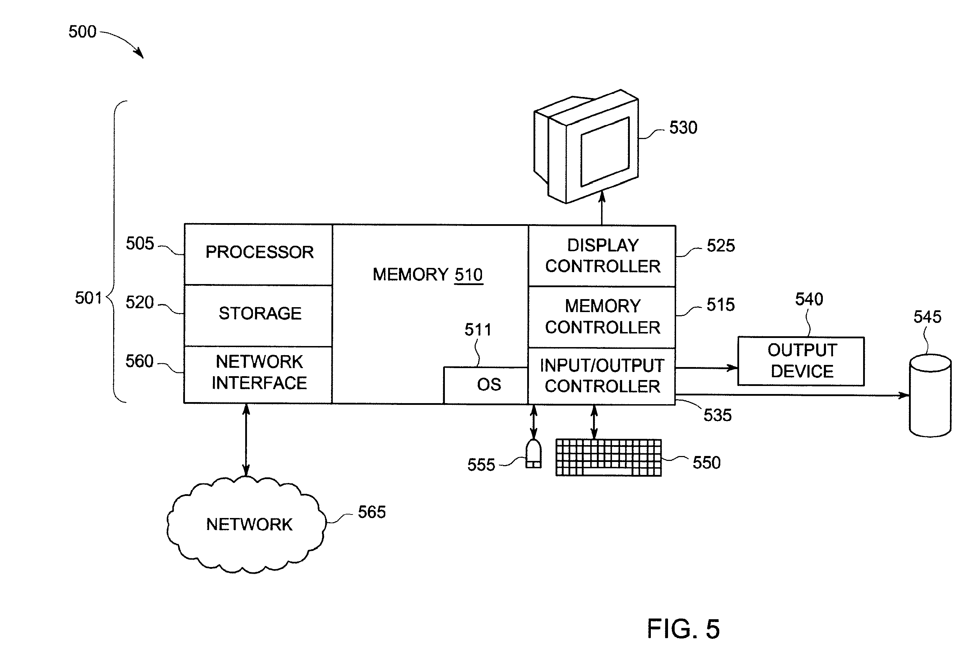

As described herein, the method 100 and other exemplary methods can be implemented in any a suitable computing system as now described. FIG. 5 illustrates an exemplary embodiment of a system 500 for organizing, planning analysis and tracking of projects and goals. The methods described herein can be implemented in software (e.g., firmware), hardware, or a combination thereof. In exemplary embodiments, the methods described herein are implemented in software, as an executable program, and is executed by a special or general-purpose digital computer, such as a personal computer, workstation, minicomputer, or mainframe computer. The system 500 therefore includes general-purpose computer 501.

In exemplary embodiments, in terms of hardware architecture, as shown in FIG. 5, the computer 501 includes a processor 505, memory 510 coupled to a memory controller 515, and one or more input and/or output (I/O) devices 540, 545 (or peripherals) that are communicatively coupled via a local input/output controller 535. The input/output controller 535 can be, but is not limited to, one or more buses or other wired or wireless connections, as is known in the art. The input/output controller 535 may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor 505 is a hardware device for executing software, particularly that stored in memory 510. The processor 505 can be any custom made or commercially available processor, a central processing unit (CPU), an auxiliary processor among several processors associated with the computer 501, a semiconductor based microprocessor (in the form of a microchip or chip set), a macroprocessor, or generally any device for executing software instructions.

The memory 510 can include any one or combination of volatile memory elements (e.g., random access memory (RAM, such as DRAM, SRAM, SDRAM, etc.)) and nonvolatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 510 may incorporate electronic, magnetic, optical, and/or other types of storage media. Note that the memory 510 can have a distributed architecture, where various components are situated remote from one another, but can be accessed by the processor 505.

The software in memory 510 may include one or more separate programs, each of which comprises an ordered listing of executable instructions for implementing logical functions. In the example of FIG. 5, the software in the memory 510 includes the project management charting methods described herein in accordance with exemplary embodiments and a suitable operating system (OS) 511. The OS 511 essentially controls the execution of other computer programs, such the project management charting systems and methods as described herein, and provides scheduling, input-output control, file and data management, memory management, and communication control and related services.

The project management charting methods described herein may be in the form of a source program, executable program (object code), script, or any other entity comprising a set of instructions to be performed. When a source program, then the program needs to be translated via a compiler, assembler, interpreter, or the like, which may or may not be included within the memory 510, so as to operate properly in connection with the OS 511. Furthermore, the project management charting methods can be written as an object oriented programming language, which has classes of data and methods, or a procedure programming language, which has routines, subroutines, and/or functions.

In exemplary embodiments, a conventional keyboard 550 and mouse 555 can be coupled to the input/output controller 535. Other output devices such as the I/O devices 540, 545 may include input devices, for example but not limited to a printer, a scanner, microphone, and the like. Finally, the I/O devices 540, 545 may further include devices that communicate both inputs and outputs, for instance but not limited to, a network interface card (NIC) or modulator/demodulator (for accessing other files, devices, systems, or a network), a radio frequency (RF) or other transceiver, a telephonic interface, a bridge, a router, and the like. The system 500 can further include a display controller 525 coupled to a display 530. In exemplary embodiments, the system 500 can further include a network interface 560 for coupling to a network 565. The network 565 can be an IP-based network for communication between the computer 501 and any external server, client and the like via a broadband connection. The network 565 transmits and receives data between the computer 501 and external systems. In exemplary embodiments, network 565 can be a managed IP network administered by a service provider. The network 565 may be implemented in a wireless fashion, e.g., using wireless protocols and technologies, such as WiFi, WiMax, etc. The network 565 can also be a packet-switched network such as a local area network, wide area network, metropolitan area network, Internet network, or other similar type of network environment. The network 565 may be a fixed wireless network, a wireless local area network (LAN), a wireless wide area network (WAN) a personal area network (PAN), a virtual private network (VPN), intranet or other suitable network system and includes equipment for receiving and transmitting signals.

If the computer 501 is a PC, workstation, intelligent device or the like, the software in the memory 510 may further include a basic input output system (BIOS) (omitted for simplicity). The BIOS is a set of essential software routines that initialize and test hardware at startup, start the OS 511, and support the transfer of data among the hardware devices. The BIOS is stored in ROM so that the BIOS can be executed when the computer 501 is activated.

When the computer 501 is in operation, the processor 505 is configured to execute software stored within the memory 510, to communicate data to and from the memory 510, and to generally control operations of the computer 501 pursuant to the software. The project management charting methods described herein and the OS 511, in whole or in part, but typically the latter, are read by the processor 505, perhaps buffered within the processor 505, and then executed.

When the systems and methods described herein are implemented in software, as is shown in FIG. 5, the methods can be stored on any computer readable medium, such as storage 520, for use by or in connection with any computer related system or method.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In exemplary embodiments, where the project management charting methods are implemented in hardware, the project management charting methods described herein can implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

Technical effects include but are not limited to providing enhanced insights into allocating proper resources, and providing an accurate and efficient method to track project objectives, taking into account the collective achievements and resources of an organization. The systems and methods described herein provide a quick assessment tool for: visually inspecting remaining work, resource allocation and lagging tasks; visualizing, building and tracking a work breakdown structure with resource estimates; analyzing the effectiveness of resource allocations and evaluating past management strategies; and shifting strategy by analyzing performance of the project against schedule and gives an instantaneous estimated completion date. It also provides insight into risk and gives information for correct risk management and planning strategies

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A project management charting method, comprising:
   defining, in a computing system, a breakdown of work for a project;
   defining, in the computing system, tasks for the breakdown of work;
   defining, in the computing system, levels into which the tasks are defined; and
   defining, in the computing system, relative influence among the tasks.
2. The method as claimed in clause 1, wherein each of the tasks is represented by a graphical image sized relative to other of the tasks, the relative sizes of the tasks indicating a respective time to completion of the tasks.
3. The method as claimed in any preceding clause, wherein the project is represented by a graphical image sized relative to the tasks, the size of the graphical image of the project representing a relative time to completion of the project.
4. The method as claimed in any preceding clause, further comprising interconnecting, in the computing system, the tasks.
5. The method as claimed in any preceding clause, wherein interconnected tasks are represented by a connector.
6. The method as claimed in any preceding clause, wherein the connector represents at least one of a direct and indirect influence among interconnected tasks.
7. The method as claimed in any preceding clause, wherein the levels represent a relative impact on the project, wherein levels relatively closer to the project indicate a higher impact on the project.
8. The method as claimed in any preceding clause, wherein the tasks are disposed in layers depending on a relative impact on the project.
9. The method claimed in any preceding clause, further comprising generating, in the computing system, a chart that displays the project, the tasks and the levels.
10. A computer program product including a non-transitory computer readable medium storing instructions for causing a computer to implement a project management charting method, the method comprising:
   defining, in a computing system, a breakdown of work for a project;
   defining, in the computing system, tasks for the breakdown of work;
   defining, in the computing system, levels into which the tasks are defined; and
   defining, in the computing system, relative influence among the tasks.
11. The computer program product as claimed in any preceding clause, wherein each of the tasks is represented by a graphical image sized relative to other of the tasks, the relative sizes of the tasks indicating a respective time to completion of the tasks.
12. The computer program product as claimed in any preceding clause, wherein the project is represented by a graphical image sized relative to the tasks, the size of the graphical image of the project representing a relative time to completion of the project.
13. The computer program product as claimed in any preceding clause, further comprising interconnecting, in the computing system, the tasks.
14. The computer program product as claimed in any preceding clause, wherein interconnected tasks are represented by a connector.
15. The computer program product as claimed in any preceding clause, wherein the connector represents at least one of a direct and indirect influence among interconnected tasks.
16. The computer program product as claimed in any preceding clause, wherein levels relatively closer to the project indicate a higher impact on the project.
17. The computer program product as claimed in any preceding clause, wherein the tasks are disposed in layers depending on a relative impact on the project.
18. The computer program product as claimed in any preceding clause, further comprising generating, in the computing system, a chart that displays the project, the tasks and the levels
19. A project management charting system, comprising:
   a processor configured to:
      define a breakdown of work for a project;
      define tasks for the breakdown of work;
      define levels into which the tasks are defined; and
      define relative influence among the tasks.
20. The system as claimed in any preceding clause, wherein the processor is further configured to:
   interconnect the tasks; and
   generate a chart that displays the project, the tasks and the levels.

## Claims

1. A project management charting method (200), comprising:
defining, in a computing system (500), a breakdown of work for a project;
defining, in the computing system (500), tasks for the breakdown of work;
defining, in the computing system (500), levels into which the tasks are defined; and
defining, in the computing system (500), relative influence among the tasks.

2. The method (200) as claimed in Claim 1, wherein each of the tasks is represented by a graphical image sized relative to other of the tasks, the relative sizes of the tasks indicating a respective time to completion of the tasks.

3. The method (200) as claimed in any preceding Claim, wherein the project is represented by a graphical image sized relative to the tasks, the size of the graphical image of the project representing a relative time to completion of the project.

4. The method (200) as claimed in any preceding Claim, further comprising interconnecting, in the computing system (500), the tasks.

5. The method (200) as claimed in any preceding Claim, wherein interconnected tasks are represented by a connector. (201,202,203)

6. The method (200) as claimed in Claim 5 wherein the connector (201,202,203) represents at least one of a direct and indirect influence among interconnected tasks.

7. The method (200) as claimed in any preceding Claim, wherein the levels represent a relative impact on the project, wherein levels relatively closer to the project indicate a higher impact on the project.

8. The method (200) as claimed in any preceding Claim, wherein the tasks are disposed in layers depending on a relative impact on the project.

9. The method (200) as claimed in any preceding Claim, further comprising generating, in the computing system (500), a chart that displays the project, the tasks and the levels.

10. A computer program product including a non-transitory computer readable medium storing instructions for causing a computer to implement a project management charting method (200), the method comprising:
defining, in a computing system (500), a breakdown of work for a project;
defining, in the computing system (500), tasks for the breakdown of work;
defining, in the computing system (500), levels into which the tasks are defined; and
defining, in the computing system (500), relative influence among the tasks.

11. The computer program product as claimed in Claim 10, wherein each of the tasks is represented by a graphical image sized relative to other of the tasks, the relative sizes of the tasks indicating a respective time to completion of the tasks.

12. The computer program product as claimed in Claim 10 or Claim 11 ,wherein the project is represented by a graphical image sized relative to the tasks, the size of the graphical image of the project representing a relative time to completion of the project.

13. The computer program product as claimed in any of Claims 10 to 12 further comprising interconnecting, in the computing system (500), the tasks.

14. A project management charting system (500), comprising:
a processor (505) configured to:
define a breakdown of work for a project;
define tasks for the breakdown of work;
define levels into which the tasks are defined; and
define relative influence among the tasks.

15. The system (500) as claimed in Claim 14, wherein the processor is further configured to:
interconnect the tasks; and
generate a chart that displays the project, the tasks and the levels.
